# EUROPÄISCHE PATENTSCHRIFT

(11) **EP 0 400 468 B1**
(45) Veröffentlichungstag und Bekanntmachung des Hinweises auf die Patenterteilung: **22.12.1993**
(21) Anmeldenummer: 90109791.5
(22) Anmeldetag: 23.05.1990
(51) Int. Cl.: B01L 3/14, B67B 7/48, A61J 1/00

(54) **Pipettiereinsatz**
Insert for a pipette
Pièce d'insertion pour une pipette

(30) Priorität: 01.06.1989 CH 2052/89
(43) Veröffentlichungstag der Anmeldung: 05.12.1990
(73) Patentinhaber: F. HOFFMANN-LA ROCHE AG, 4002 Basel (CH)
(72) Erfinder: Greter, Andreas, CH-6312 Steinhausen (CH)
(74) Vertreter: Ventocilla, Abraham

(56) Entgegenhaltungen:
- WO-A-87/05208
- AU-A- 516 430
- US-A- 3 870 183
- US-A- 4 543 101
- US-A- 4 808 381

## Beschreibung

Die Erfindung betrifft einen Pipettiereinsatz für eine Pipettiervorrichtung zur Entnahme einer flüssigen Probe aus einem Vakuumröhrchen, das mit einem Stöpsel luftdicht verschlossen ist, welcher Pipettiereinsatz aus einem Kunststoff besteht und einen länglichen Körper hat, der an einem Ende einen kegelförmigen Teil, am anderen Ende eine hohle Spitze und dazwischen einen mittleren, rohrförmigen Teil hat, wobei der mittlere Teil des Körpers entlang seiner Längsachse eine Bohrung hat, die den Innenraum des kegelförmigen Teils mit dem Innenraum der hohlen Spitze verbindet.

Vakuumröhrchen ("vacutainers") sind heutzutage die meist verwendeten Proberöhrchen. Zur Entnahme einer Blutprobe wird üblicherweise eine beidseitig angespitzte Kanüle verwendet, deren eine Spitze in die Vene eines Patienten eingeführt wird, während die andere Spitze in ein evakuiertes Vakuumrörchen durch sein Stöpsel hineingesteckt wird. Wenn diese Verbindung hergestellt ist, bewirkt der Differenzdruck, dass die Blutprobe in das Vakuumrörchen fliesst.

Nach der Entnahme der Probe bleibt im Vakuumröhrchen in der Regel ein Unterdruck. Würde man im Labor den Stöpsel entfernen, um die Probe aus dem Vakuumröhrchen zu entnehmen, müsste man damit rechnen, dass durch den plötzlichen Druckausgleich ein Luftstrom in das Röhrchen eindringt, und dass dadurch Probenfragmente aus dem Röhrchen gespritzt werden. Damit wäre eine beachtliche Infektionsgefahr vorhanden, weil die in dem Vakuumröhrchen enthaltenen Proben (z.B. Blutproben) in der Regel als möglicherweise infektiös zu betrachten sind. Laborpersonal, das mit solchen Proben umgehen muss, würde die Gefahr eingehen, durch die Krankheit infiziert zu werden, die durch eine Probe übertragen werden kann. Es ist deshalb sehr wichtig, die Handhabung der Proben auf ein Minimum zu reduzieren und gefährliche Manipulationen zu eliminieren.

Um dieses Problem zu lösen, ist bereits ein Pipettiereinsatz vorgeschlagen worden (PCT-Patentanmeldung mit Veröffentlichungsnummer WO 87/05208), der ein Pipettierkanal enthält, der an einem Ende eine Spitze hat, mit der der Stöpsel des Vakuumröhrchens durchgestochen wird, wenn der Pipettiereinsatz auf ein Vakuumröhrchen eingesetzt wird. Der Pipettierkanal hat zwei Funktionen. Einerseits ermöglicht er einen Druckausgleich, so dass nach dem Einsetzen des Pipettiereinsatzes der Druck im Röhrchen gleich der Luftdruck ist. Andererseits dient der Pipettierkanal als Führungsglied für das Saugrohr oder die Pipettiernadel einer Pipettiervorrichtung, mit der die Probe aus dem Röhrchen entnommen werden kann.
- Beim Einsetzen des Pipettiereinsatzes durch den Stöpsel des Vakuumröhrchens findet plötzlicher Druckausgleich statt, so dass bei einer relativ grossen Druckdifferenz Probenfragmente aus dem Röhrchen gespritzt werden können, und die oben erwähnte Infektionsgefahr zur Folge haben können.
- Sobald der Pipettiereinsatz durch den Stöpsel des Vakuumröhrchens eingesetzt ist, verbindet der Pipettierkanal der Innenraum des Röhrchens mit der Umgebung, d.h. das eine Probe enthaltende Röhrchen ist offen. Dadurch ist die Gefahr gegeben, dass bei der Handhabung des Röhrchens Probenfragmente das Röhrchen verlassen und eine Infektionsgefahr verursachen. Ausserdem kann ein Teil der Probe durch Verdunstung verloren gehen.

Der Erfindung liegt daher die Aufgabe zugrunde, ein Pipettiereinsatz zu schaffen, der diese Nachteile nicht hat.

Erfindungsgemäss wird diese Aufgabe mit einem Pipettiereinsatz der eingangs genannten Art gelöst, welcher dadurch gekennzeichnet ist, dass
a) die hohle Spitze durch eine mit einer Pipettiernadel durchstechbare Wand gebildet ist, und
b) die Aussenwand des mittleren Teils des Körpers mindestens einen Verbindungskanal enthält, der sich zwischen dem kegelförmigen Teil und der Spitze erstreckt und dessen Querschnitt kleiner als der Querschnitt der Bohrung des mittleren Teils des Körpers ist.

Der erfindungsgemässe Pipettiereinsatz bietet insbesondere folgende Vorteile:
- Der relativ kleine Querschnitt des mindestens einen Verbindungskanal ermöglicht einen relativ langsamen Druckausgleich nach dem Einsetzen des Pipettiereinsatzes aus dem Vakuumröhrchen. Es ist dadurch ausgeschlossen, dass beim Druckausgleichvorgang Probenfragmente aus dem Röhrchen entweichen können.
- Die durchstechbare Wand der Spitze des Pipettiereinsatzes wird erst zum Zeitpunkt durchgestochen, zu dem die Probe aus dem Röhrchen mit der Pipettiernadel einer Pipettiervorrichtung entnommen wird. Vorher bleibt das Röhrchen durch den Stöpsel und den darin eingesteckten Pipettiereinsatz verschlossen, wodurch ein Entweichen der Probe aus dem Röhrchen völlig verunmöglicht wird. Probenverluste durch Verdunstung oder durch die Handhabung des Röhrchens sind daher ausgeschlossen.
- Zur Entnahme der Probe aus dem Röhrchen wird nach dem Einsetzen des Pipettiereinsatzes und nach dem Druckausgleichvorgang eine Pipettiernadel durch die Bohrung im mittleren Teil des Pipettiereinsatzes eingeführt und mit dieser Nadel wird die Wand an der Spitze des Pipettiereinsatzes durchgestochen. Auf diese Weise besteht keine Möglichkeit, dass ein Probenfragment in die Bohrung gelangen kann und dort auf die Aussenwand der Pipettiernadel haften kann. Die Gefahr einer unerwünschten Schleppung von Probenfragmenten auf der Aussenwand der Nadel (sogenannter "carry over") ist somit ausgeschlossen.
- Durch die soeben erwähnten Vorteile wird einen höchstmöglichen Schutz gegen die Infektionsgefahr für das Laborpersonal erzielt. Der erfindungsgemässe Pipettiereinsatz ist ausserdem dafür geeignet, als billiger Wegwerfteil hergestellt zu werden.

Ausführungsbeispiele der Erfindung werden im folgenden anhand der beiliegenden Zeichnungen beschrieben. Es zeigen:
- Fig. 1: ein Vakuumröhrchen 13, einen erfindungsgemässen Pipettiereinsatz 11 und eine Pipettiernadel 19,
- Fig. 2: eine Druntersicht einer ersten Ausführungsform eines erfindungsgemässen Pipettiereinsatzes 11,
- Fig. 3: einen Querschnitt der Ausführungsform gemäss Fig. 2 durch die Linie III-III,
- Fig. 4: eine Draufsicht der Ausführungsform gemäss der Figuren 2 und 3,
- Fig. 5: eine Druntersicht einer zweiten Ausführungsform eines erfindungsgemässen Pipettiereinsatzes 11,
- Fig. 6: einen Querschnitt der Ausführungsform gemäss Fig. 5 durch die Linie VI-VI,
- Fig. 7: eine Draufsicht der Ausführungsform gemäss der Figuren 5 und 6,
- Fig. 8: einen schematischen Querschnitt des Pipettiereinsatzes 11 gemäss Figuren 5-7 mit einem darin eingeführten Druckdorn 41,
- Fig. 9: einen schematischen Querschnitt der Einführung der Ausführungsform des Pipettiereinsatzes 11 gemäss Figuren 5-7 durch den Stöpsel 14 eines Vakuumröhrchens 13 mittels des Druckdorns 41,
- Fig. 10: einen schematischen Querschnitt des gemäss Fig. 9 eingesetzten Pipettiereinsatzes 11 nach der Entfernung des Druckdorns 41, und
- Fig. 11: einen schematischen Querschnitt des gemäss Fig. 9 eingesetzten Pipettiereinsatzes 11, dessen Spitze 17 mit einer Pipettiernadel 19 zur Entnahme einer Probe durchgestochen wird.
- Fig. 12: einen Querschnitt einer Variante der Ausführungsform gemäss Figuren 2-4.
- Fig. 13: einen Querschnitt der Ausführungsform gemäss Fig. 12, in welchem Querschnitt die Abmessungen in Millimeter angegeben sind.
- Fig. 14: den Querschnitt XIV-XIV der Fig. 13, in welchem Querschnitt die Abmessungen in Millimeter angegeben sind.

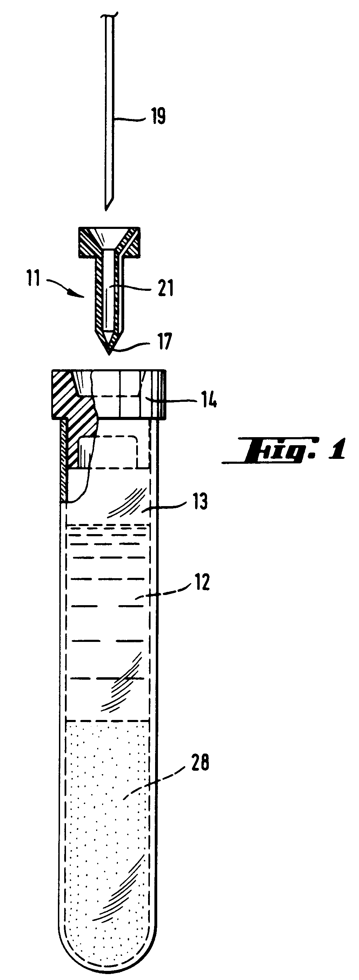

Wie anhand der Figur 1 gezeigt, dient ein erfindungsgemässer Pipettiereinsatz 11 als Bindeglied zwischen einer Pipettiernadel 19 einer in Figur 1 nicht gezeigten Pipettiervorrichtung und einem Vakuumröhrchen 13, das z.B. eine Blutprobe enthält und mit einem Stöpsel 14 luftdicht verschlossen ist. Die Blutprobe besteht z.B. aus einem flüssigen Teil 12 und einem festen Teil 28, die voneinander durch Zentrifugierung getrennt worden sind. Zur Entnahme einer bestimmten Menge der flüssigen Probe 12 wird zuerst der Pipettiereinsatz 11 mittels einer geeigneten, in Figur 1 nicht gezeigten Vorrichtung durch den Stöpsel 14 eingeführt, bis seine Spitze sich im inneren Raum des Vakuumröhrchens 13 befindet. Danach wird die Pipettiernadel 19 durch eine Bohrung 21 des Pipettiereinsatzes 11 in das Vakuumröhrchen 13 eingeführt, wobei die Wand an der Spitze des Pipettiereinsatzes mit der Nadel 19 durchgestochen wird.

Der Pipettiereinsatz 11 wird durch Spritzgiessen eines geeigneten Kunststoffs hergestellt. Dieser Kunststoff muss einerseits hart genug sein, damit der Pipettiereinsatz 11 beim Durchstechen des Stöpsels 14 intakt bleibt, er muss andererseits weich genug sein, damit die Spitze 17 des Pipettiereinsatzes mit einer gewöhnlichen Pipettiernadel 19 leicht durchstochen werden kann. Ein für die Herstellung des Pipettiereinsatzes 11 geeigneter Kunststoff ist z.B. Polyethylen, insbesondere das sogenannte High Density Polyethylene (HDPE), das auch mit Niederdruck Polyethylen (NDPE) oder Hartpolyethylen bezeichnet wird.

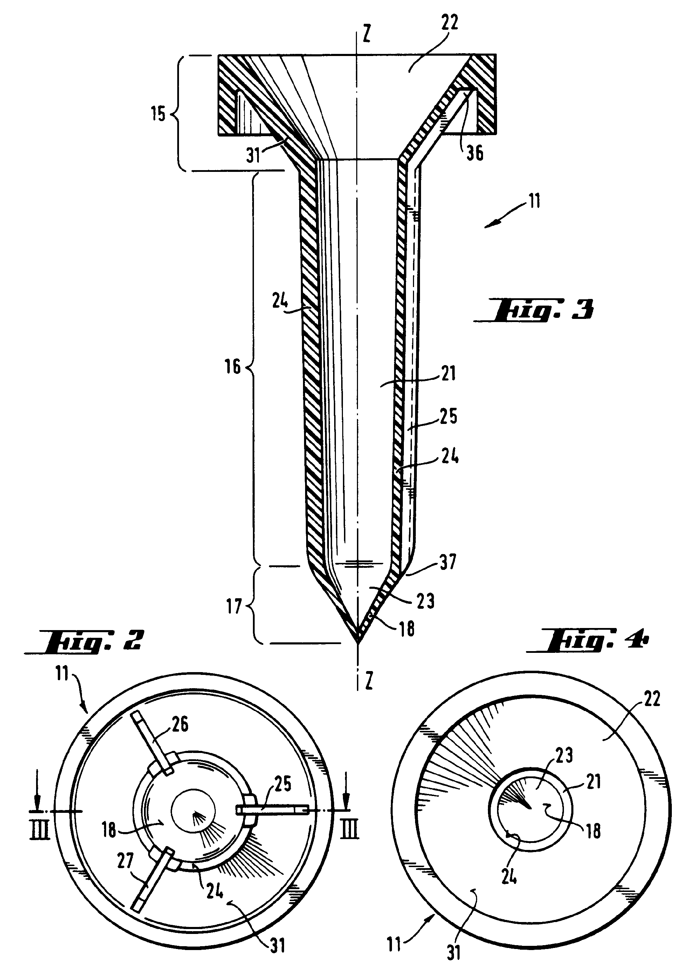

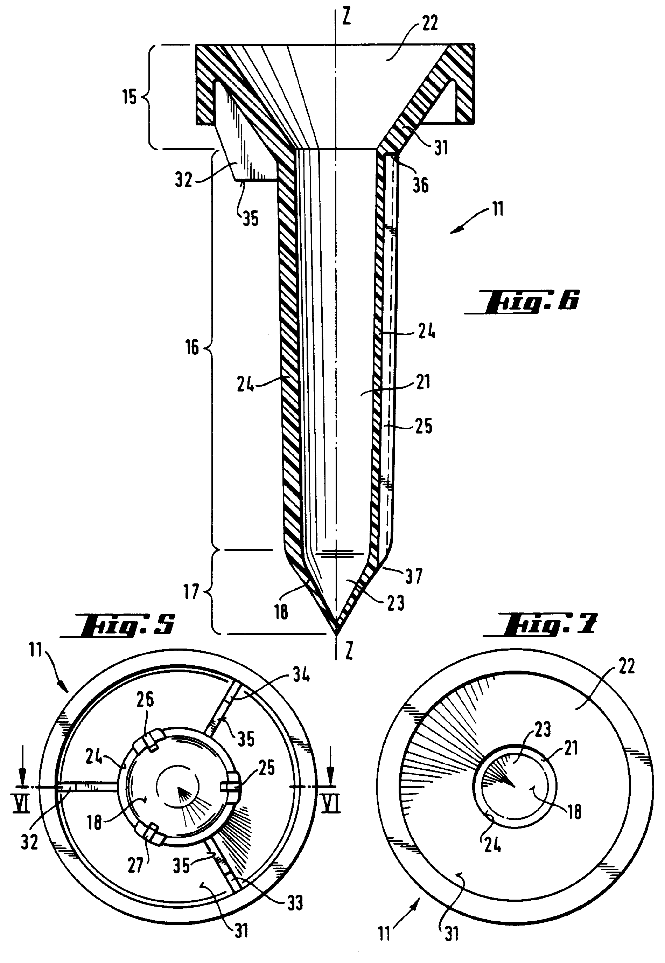

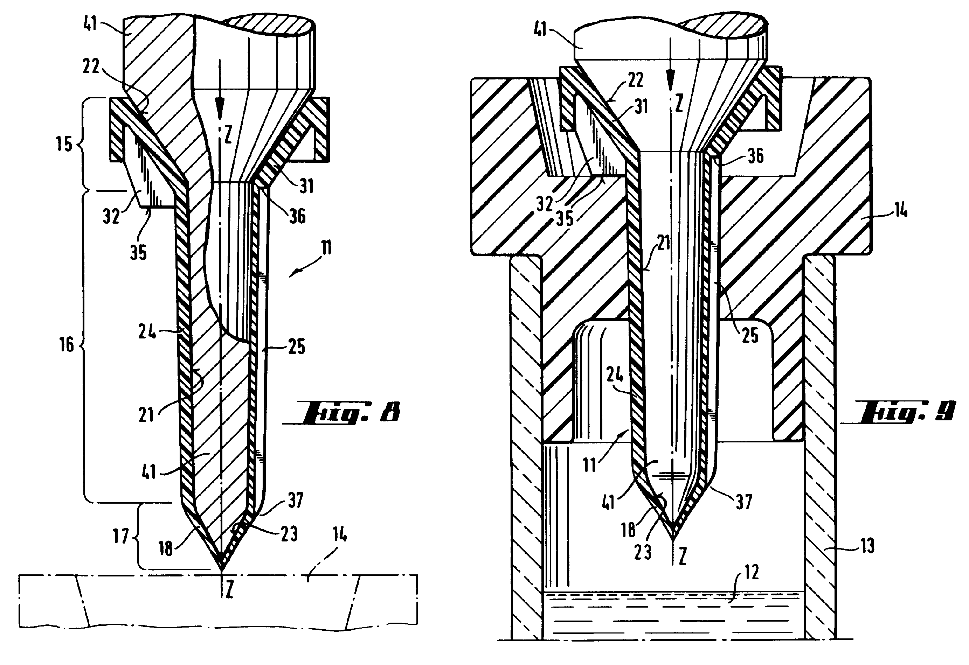

Eine erste Ausführungsform eines erfindungsgemässen Pipettiereinsatzes 11 wird nun anhand der Figuren 2-4 beschrieben. Die Figur 2 zeigt eine Druntersicht dieser Ausführungsform. Die Figur 3 zeigt einen Querschnitt dieser Ausführungsform durch die Linie III-III in Figur 2. Die Figur 4 zeigt eine Draufsicht dieser Ausführungsform.

Wie aus Figur 3 ersichtlich, hat der Pipettiereinsatz 11 einen länglichen Körper, der an einem Ende einen kegelförmigen Teil 15 und am anderen Ende eine hohle Spitze 17 hat. Die Spitze 17 ist durch eine kegelförmige Wand 18 gebildet, die mit einer Pipettiernadel durchstechbar ist. Der längliche Körper des Pipettiereinsatzes 11 hat einen mittleren, rohrförmigen Teil 16, der sich zwischen dem kegelförmigen Teil 15 und der Spitze 17 erstreckt.

Der mittlere Teil 16 des Pipettiereinsatzes 11 hat eine Bohrung 21, die sich entlang der Längsachse Z-Z erstreckt und den Innenraum 22 des kegelförmigen Teils 15 mit dem Innenraum 23 der hohlen Spitze 17 verbindet. Der mittlere Teil 16 des Pipettiereinsatzes hat eine Aussenwand 24, die mindestens einen Verbindungskanal 25 enthält, der sich im wesentlichen zwischen dem kegelförmigen Teil 15 und der Spitze 17 erstreckt und dessen Querschnitt wesentlich kleiner als der Querschnitt der Bohrung 21 ist. Der Verbindungskanal 25 hat ein oberes Ende 36 und ein unteres Ende 37. Der Pipettiereinsatz 11 hat vorzugsweise mindestens zwei solche Verbindungskanäle, die um die Längsachse Z-Z des Pipettier- einsatzes symmetrisch angeordnet sind. Die Ausführungsform gemäss Figuren 2-4 hat drei solche Verbindungskanäle 25,26,27, die um die Längsachse Z-Z des Pipettiereinsatzes symmetrisch angeordnet sind. Wie aus Figuren 2 und 3 ersichtlich ist jeder dieser Verbindungskanäle als eine Rille in der Aussenwand 24 und in der Aussenwand des kegel- förmigen Teils 15 ausgebildet. Ueber den mittleren Teil 16 des Pipettiereinsatzes verlaufen diese Rillen vorzugsweise im wesentlichen parallel zur Längsachse Z-Z des Pipettier einsatzes.

Wie nachstehend im Detail beschrieben wird, dienen die Verbindungskanäle 25,26,27 zur Herstellung eines Druckausgleichs zwischen dem Innenraum des verschlossenen Vakuumröhrchens 13 und der Luft ausserhalb des Röhrchens. Der Querschnitt der Verbindungskanäle 25,26,27 wird so klein gewählt, dass beim Druckausgleichvorgang ein Entweichen der Probe aus dem Vakuumröhrchen durch diese Verbindungskanäle ausgeschlossen ist.

Die Dicke der Wand 18 der Spitze 17 des Pipettiereinsatzes wird so dünn gewählt, dass sie mit einer gewöhnlichen Pipettiernadel leicht durchstechbar ist. Wie in Fig. 13 gezeigt, ist die Dicke der Wand 18 z.B. 0,15 mm.

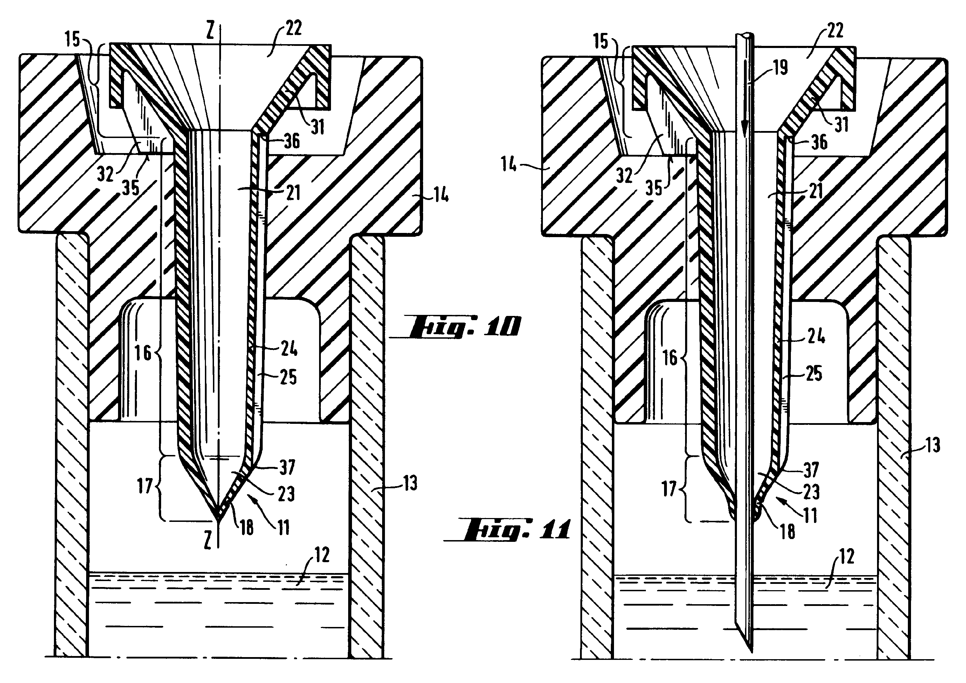

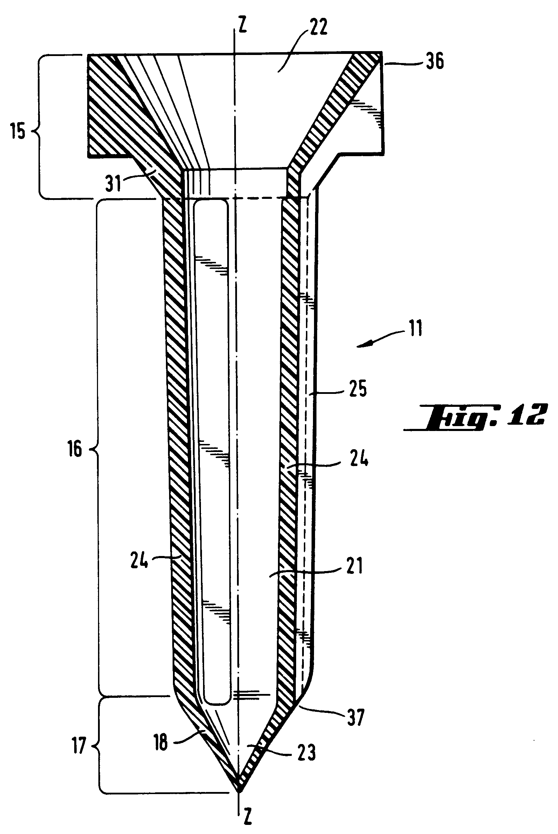

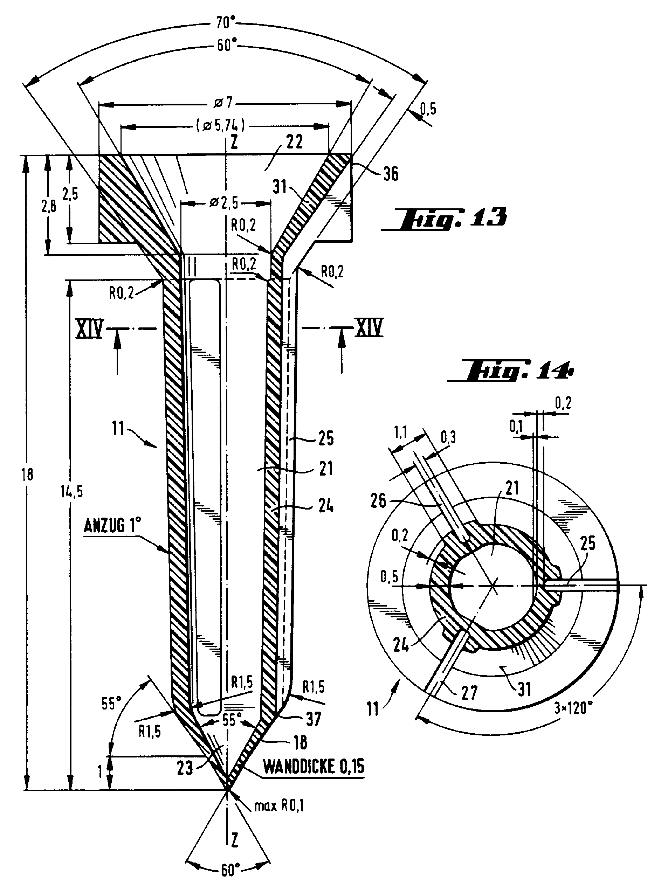

Eine zweite Ausführungsform eines erfindungsgemässen Pipettiereinsatzes 11 wird nachstehend anhand der Figuren 5-7 beschrieben. Die Figur 5 zeigt eine Druntersicht dieser zweiten Ausführungsform. Die Figur 6 zeigt einen Querschnitt dieser Ausführungsform durch die Linie VI-VI in Figur 5. Die Figur 7 zeigt eine Draufsicht dieser Ausführungsform.

Die zweite Ausführungsform gemäss den Figuren 5-7 ist weitgehend mit der Ausführungsform gemäss den Figuren 2-4 identisch, so dass die obige Beschreibung der Figuren 2-4 weitgehend auch für die Figuren 5-7 gilt.

Die zweite Ausführungsform gemäss den Figuren 5-7 unterscheidet sich von der Ausführungsform gemäss Figuren 2-4 lediglich durch folgende Merkmale:
- Bei der zweiten Ausführungsform erstrecken sich die Verbindungskanäle 25,26,27 lediglich über die ganze Länge des mittleren Teils 16 des Pipettiereinsatzes. Diese Kanäle sind daher etwas kürzer als in der ersten Ausführungsform gemäss Figuren 2-4.
- Bei der zweiten Ausführungsform hat die Aussenwand des kegelförmigen Teils 15 des Pipettiereinsatzes mindestens einen flügelförmigen Vorsprung 32, der sich in Richtung der Längsachse Z-Z des Körpers erstreckt und ein der Spitze 17 zugewandtes Ende 35 hat. Dieses Ende liegt der Spitze 17 näher als das obere Ende 36 des mindestens einen Verbindungskanal 25, welches obere Ende 36 dem kegelförmigen Teil 15 benachbart ist oder an der Grenze zwischen dem mittleren Teil 16 und dem kegelförmigen Teil 15 liegt.

In einer bevorzugten Ausführungsform hat die Aussenwand 31 des kegelförmigen Teils 15 mindestens zwei der soeben beschriebenen Vorsprünge. Wie aus der Figur 5 ersichtlich, hat die Aussenwand 31 des kegelförmigen Teils 15 drei flügelförmige Vorsprünge 32,33,34, die um die Längsachse Z-Z des Pipettiereinsatzes symmetrisch angeordnet sind.

Durch die relative Lage der Vorsprünge 32-34 und der Verbindungskanäle 25-27 wird sichergestellt, dass der beabsichtigte Druckausgleichvorgang durch die Verbindungskanäle 25-27 stattfinden kann.

Eine typische Verwendung des erfindungsgemässen Pipettiereinsatzes 11 wird nun anhand der Figuren 1 und 8-11 beschrieben. Die Figuren 8-11 zeigen unter anderem einen Pipettiereinsatz gemäss den Figuren 5-7, die nachstehende Beschreibung gilt jedoch ebenfalls für die Ausführungsform des Pipettiereinsatzes gemäss der Figuren 2-4.

Zur Entnahme einer bestimmten Menge einer Probe 12, die sich in einem Vakuumröhrchen 13 befindet, ist gemäss der in Figur 1 schematisch gezeigten Anordnung vorgesehen, einen erfindungsgemässen Pipettiereinsatz 11 und eine Pipettiernadel 19 einer Pipettiervorrichtung zu verwenden.

Wie in den Figuren 8 und 9 dargestellt, wird in einem Vorbereitungsschritt für die spätere Probeentnahme ein Pipettiereinsatz 11 mittels einer geeigneten Vorrichtung durch den Stöpsel 14 des Vakuumröhrchens 13 eingeführt. Hierfür wird zuerst gemäss Figur 8 ein Druckdorn 41 in die Bohrung 21 des Pipettiereinsatzes 11 eingeführt. Wie aus Figur 8 ersichtlich, ist die Form des Druckdorns 41 vorzugsweise sehr genau an der Innenwand des oberen, kegelförmigen Teils des Pipettiereinsatzes 11, an der Innenwand der Bohrung und an der hohlen Spitze im Innenraum des Pipettiereinsatzes 11 angepasst. Vor der Einführung des Pipettiereinsatzes 11 durch den Stöpsel 14 des Vakuunmröhrchens 13 wird der Druckdorn 41 in den Pipettiereinsatz eingeführt, bis er dort die in Figur 8 gezeigten Stellung einnimmt.

Zur Einführung des Pipettiereinsatzes 11 in den Stöpsel 14 wird der Pipettiereinsatz 11 vom Druckdorn 41 in der durch einen Pfeil angedeuteten Richtung gegen den mittleren Teil des Stöpsels 14 gedrückt, bis der Pipettiereinsatz 11 den Stöpsel 14 durchsticht und die in Figur 9 gezeigten Stellung einnimmt. Es ist aus der Figur 9 ersichtlich, dass der Vorsprung 32 (und dies gilt auch für die in Figur 9 nicht gezeigten Vorsprünge 33,34) als Abstandshalter dient, durch den sichergestellt ist. dass der mindestens eine Verbindungskanal 25 den Innenraum des Vakuumröhrchens 13 mit der Luft ausserhalb des Röhrchens verbindet und somit einen Druckausgleich ermöglicht.

Nach der Einführung des Pipettiereinsatzes 11 in den Stöpsel 14 in der soeben beschriebenen Form verbleibt der Pipettiereinsatz 11 im Stöpsel 14 in der in Figur 10 gezeigten Stellung. Es ist dabei zu beachten. dass die kegelförmige Wand 18 der Spitze 17 des Pipettiereinsatzes 11 nach seiner Einführung in den Stöpsel 14 noch intakt ist und ein Entweichen der Probe aus dem Vakuumröhrchen 13 durch die Bohrung 21 verhindert.

Vakuumröhrchen 13 die Proben enthalten und die mit einem Pipettiereinsatz 11 in der in Figur 10 gezeigten Stellung versehen sind, sind geschlossene Behälter. Mit solchen Vakuumröhrchen können daher die verschiedensten Verfahrensschritte, wie z.B. Zentrifugierung oder ein Schütteln der Vakuumröhrchen, durchgeführt werden, ohne ein Entweichen von Probenfragmenten aus den Vakuumröhrchen befürchten zu müssen.

Wie in Figur 11 schematisch dargestellt, wird zur Entnahme einer bestimmten Menge der Probe 12 im Vakuumröhrchen 13 eine Pipettiernadel 19 durch die Bohrung 21 des Pipettiereinsatzes 11 in der mit einem Pfeil angedeuteten Richtung eingeführt, bis sie die in Figur 11 gezeigten Stellung einnimmt. Bei dieser Einführung wird die Wand 18 der Spitze 17 des Pipettiereinsatzes 11 durch die Nadel 19 durchgestochen. Nach der Entnahme der Probe wird die Nadel 19 aus dem Vakuumröhrchen 13 bzw. aus dem Pipettiereinsatz 11 herausgenommen. Durch den Stich verbleibt in der Wand 18 einen sehr kleinen Schlitz, so dass bei einer normalen Behandlung der Vakuumröhrchen ein unerwünschtes Entweichen von Probenfragmenten aus dem Vakuumröhrchen sehr unwahrscheinlich ist.

Fig. 12 zeigt einen Querschnitt einer Variante der Ausführungsform gemäss Figuren 2-4. In dieser Variante erstrecken sich die Verbindungskanäle 25, 26, 27 bis zum obersten Rand des kegelförmigen Teils 15 des Pipettiereinsatzes.

Die Abmessungen in der Ausführungsform gemäss Fig. 12 sind in den Figuren 13 und 14 in Millimeter angegeben. Die Fig. 13 zeigt einen Querschnitt entlang der Längsachse des Pipettiereinsatzes. Die Fig. 14 zeigt den Querschnitt XIV-XIV der Fig. 13.

Die in den Figuren 13 und 14 angegebenen Abmessungen gelten weitgehend auch für die Ausführungsformen gemäss Figuren 2-4 und 5-7.

Im Rahmen der Erfindung sollten einige Abmessungen des Pipettiereinsatzes in den nachstehend angegebenen Bereichen liegen:

Die Dicke der Wand 24 des mittleren Teils 16 des Pipettiereinsatzes 11 sollte vorzugsweise in einem Bereich zwischen ca. 0,3 mm und ca. 1,0 mm liegen.

Die Dicke des dünnsten Teils der Wand 18 der Spitze 17 des Pipettiereinsatzes 11 sollte vorzugsweise in einem Bereich zwischen ca. 0,1 mm und ca. 0,3 mm liegen.

Der mittlere Durchmesser der Bohrung 21 im mittleren Teil 16 des Pipettiereinsatzes 11 sollte vorzugsweise in einem Bereich zwischen ca. 1,5 mm und ca. 4,0 mm liegen.

Der Durchmesser von jedem der Verbindungskanäle 25, 26, 27 entlang der Aussenwand 24 des Pipettiereinsatzes 11 sollte vorzugsweise in einem Bereich zwischen ca. 0,1 mm und ca. 0,5 mm liegen.

## Patentansprüche

1. Pipettiereinsatz (11) für eine Pipettiervorrichtung zur Entnahme einer flüssigen Probe (12) aus einem Vakuumröhrchen (13), das mit einem Stöpsel (14) luftdicht verschlossen ist, welcher Pipettiereinsatz aus einem Kunststoff besteht und einen länglichen Körper hat, der an einem Ende einen kegelförmigen Teil (15), am anderen Ende eine hohle Spitze (17) und dazwischen einen mittleren, rohrförmigen Teil (16) hat, wobei der mittlere Teil (16) des Körpers entlang seiner Längsachse (Z-Z) eine Bohrung (21) hat, die den Innenraum (22) des kegelförmigen Teils (15) mit dem Innenraum (23) der hohlen Spitze (17) verbindet,
dadurch gekennzeichnet, dass
a) die hohle Spitze durch eine mit einer Pipettiernadel durchstechbare Wand (18) gebildet ist, und
b) die Aussenwand (24) des mittleren Teils (16) des Körpers mindestens einen Verbindungskanal (25) enthält, der sich zwischen dem kegelförmigen Teil (15) und der Spitze (17) erstreckt und dessen Querschnitt kleiner als der Querschnitt der Bohrung (21) des mittleren Teils (16) des Körpers ist.

2. Pipettiereinsatz gemäss Anspruch 1, dadurch gekennzeichnet, dass die Aussenwand (31) des kegelförmigen Teils (15) mindestens einen Vorsprung (32) hat, der sich in Richtung der Längsachse (Z-Z) des Körpers erstreckt und ein der Spitze (17) zugewandtes Ende (35) hat, das dieser Spitze näher liegt als das obere Ende (36) des mindestens einen Verbindungskanals (25), welches obere Ende (36) dem kegelförmigen Teil (15) benachbart ist.

3. Pipettiereinsatz gemäss Anspruch 1, dadurch gekennzeichnet, dass er mindestens zwei Verbindungskanäle (25,26,27) hat, die um die Längsachse (Z-Z) des Körpers symmetrisch angeordnet sind.

4. Pipettiereinsatz nach einem der vorhergehenden Ansprüchen, dadurch gekennzeichnet, dass der mindestens eine Verbindungskanal (25) eine Rille in der Aussenwand (24) des mittleren Teils (16) des Körpers ist, welche Rille sich im wesentlichen parallel zur Längsachse (Z-Z) des Körpers erstreckt.

5. Pipettiereinsatz gemäss Anspruch 2, dadurch gekennzeichnet, dass die Aussenwand (31) des kegelförmigen Teils (15) mindestens zwei Vorsprünge (32,33,34) hat, die um die Längsachse (Z-Z) des Körpers symmetrisch angeordnet sind.

6. Pipettiereinsatz gemäss Anspruch 2, dadurch gekennzeichnet, dass die Dicke der Wand (24) des mittleren Teils (16) des Pipettiereinsatzes (11) in einem Bereich zwischen 0,3 mm und 1,0 mm liegt.

7. Pipettiereinsatz gemäss Anspruch 1, dadurch gekennzeichnet, dass die Dicke des dünnsten Teils der Wand (18) der Spitze (17) des Pipettiereinsatzes (11) in einem Bereich zwischen 0,1 mm und 0,3 mm liegt.

8. Pipettiereinsatz gemäss Anspruch 1, dadurch gekennzeichnet, dass der mittlere Durchmesser der Bohrung (21) im mittleren Teil (16) des Pipettiereinsatzes (11) in einem Bereich zwischen 1,5 mm und 4,0 mm liegt.

9. Pipettiereinsatz gemäss Anspruch 1, dadurch gekennzeichnet, dass der Durchmesser von jedem der Verbindungskanäle (25, 26, 27) entlang der Aussenwand (24) des Pipettiereinsatzes (11) in einem Bereich zwischen 0,1 mm und 0,5 mm liegt.

## Claims

1. A pipetting insert (11) for a pipetting device for removing a liquid specimen (12) from a vacutainer (13) closed in airtight manner by a plug (14), the insert (11) being made of plastics and having an elongate body having a conical part (15) at one end and a hollow tip (17) at the other end and between them a central tubular part (16), the same being formed along its longitudinal axis (Z-Z) with a bore (21) connecting the interior (22) of the conical part (15) to the interior (23) of the hollow tip (27),
characterized in that
(a) the hollow tip is in the form of a wall (18) pierceable by a pipetting needle, and
b) the outer wall (24) of the central part (16) of the body has at least one connecting duct (24) which extends between the conical part (15) and the tip (17) and which has a smaller cross-section than the bore (21) of the central part (16) of the body.

2. A pipetting insert according to claim 1, characterized in that the outer wall (31) of the conical part (15) has at least one projection (32) which extends in the direction of the longitudinal axis (Z-Z) of the body and has an end (35) facing the tip (17), the end (35) being nearer such tip than is the top end (36) of the at least one connecting duct (25), the top end (36) being adjacent the conical part (15).

3. A pipetting insert according to claim 1, characterized in that it has a least two connecting ducts (25, 26, 27) disposed symmetrically around the longitudinal axis (Z-Z) of the body.

4. A pipetting insert according to any of the previous claims, characterized in that the at least one connection duct (25) is a groove in the outer wall (24) of the central part (16) of the body, the groove extending substantially parallel to the longitudinal axis (Z-Z) of the body.

5. A pipetting insert according to claim 2, characterized in that the outer wall (31) of the conical part (15) has at least two projections (32, 33, 34) arranged symmetrically around the longitudinal axis (Z-Z) of the body.

6. A pipetting insert according to claim 2, characterized in that the thickness of the wall (24) of the central part (16) of the pipetting insert (11) is in a range between 0.3 mm and 1.0 mm.

7. A pipetting insert according to claim 1, characterized in that the thickness of the thinnest part of the wall (18) of the tip (17) is in a range between 0.1 mm and 0.3 mm.

8. A pipetting insert according to claim 1, characterized in that the average diameter of the bore (21) in the central part (16) is in a range between 1.5 mm and 4.0 mm.

9. A pipetting insert according to claim 1, characterized in that the diameter of each of the connecting ducts (25-27) along the insert outer wall (24) is in a range between 0.1 mm and 0.5 mm.

## Revendications

1. Insert de pipetage (11) pour un dispositif de pipetage destiné à prélever un échantillon liquide (12) dans un tube à vide (13), qui est fermé à joint étanche à l'air par un bouchon (14), lequel insert de pipetage est composé d'une matière plastique et possède un corps de forme allongée, qui a une partie conique (15) à une première extrémité, une pointe creuse (17) à l'autre extrémité, et une partie centrale tubulaire (16) entre ces deux extrémités, la partie centrale (16) du corps présentant, le long de son axe longitudinal (Z-Z), une lumière (21) qui relie le volume intérieur (22) de la partie conique (15) au volume intérieur (23) de la pointe creuse (17),
caractérisé en ce que
a) la pointe creuse est formée par une paroi (18) qui peut être traversée par une aiguille de pipetage ; et
b) la paroi extérieure (24) de la partie centrale (16) du corps présente au moins un canal de liaison (25) qui s'étend entre la partie conique (15) et la pointe (17) et dont la section est plus petite que la section de la lumière (21) de la partie centrale du corps.

2. Insert de pipetage selon la revendication 1, caractérisé en ce que la paroi extérieure (31) de la partie conique (15) présente au moins une saillie (32) qui s'étend parallèlement à l'axe longitudinal (Z-Z) du corps et possède une extrémité (35) dirigée vers la pointe (17) qui est plus proche de cette pointe que l'extrémité supérieure (36) dudit au moins un canal de liaison (25), laquelle extrémité supérieure (36) est adjacente à la partie conique (15).

3. Insert de pipetage selon la revendication 1, caractérisé en ce qu'il possède au moins deux canaux de liaison (26, 27) qui sont disposés symétriquement autour de l'axe longitudinal (Z-Z) du corps.

4. Insert de pipetage selon une des revendications précédentes, caractérisé en ce que ledit au moins un canal de liaison (25) est une rainure de la paroi extérieure (24) de la partie centrale (16) du corps, laquelle rainure s'étend sensiblement parallèlement à l'axe longitudinal (Z-Z) du corps.

5. Insert de pipetage selon la revendication 2, caractérisé en ce que la paroi extérieure (31) de la partie conique (15) possède au moins deux saillies (32, 33, 34) qui sont disposées symétriquement autour de l'axe longitudinal (Z-Z) du corps.

6. Insert de pipetage selon la revendication 2, caractérisé en ce que la paroi (24) de la partie centrale (16) de l'insert de pipetage (11) est comprise dans un intervalle d'environ 0,3 mm et 1,0 mm.

7. Insert de pipetage selon la revendication 1, caractérisé en ce que l'épaisseur de la partie la plus mince de la paroi (18) de la pointe (17) de l'insert de pipetage (11) se trouve dans l'intervalle d'entre 0,1 et 0,3 mm.

8. Insert de pipetage selon la revendication 1, caractérisé en ce que le diamètre moyen de la lumière 21 de la partie centrale (16) de l'insert de pipetage (11) se trouve dans l'intervalle d'entre 1,5 mm et 4,0 mm.

9. Insert de pipetage selon la revendication 1, caractérisé en ce que le diamètre de chacun des canaux de liaison (25, 26, 27) prévus le long de la paroi extérieure (24) de l'insert de pipetage (11) se trouve dans l'intervalle d'entre 0,1 mm et 0,5 mm.
